# EUROPÄISCHE PATENTSCHRIFT

(11) **EP 1 895 758 B1**
(45) Veröffentlichungstag und Bekanntmachung des Hinweises auf die Patenterteilung: **14.07.2010**
(21) Anmeldenummer: 06119718.2
(22) Anmeldetag: 29.08.2006
(51) Int. Cl.: H04N 1/028, G03B 42/02, H02P 8/00

(54) **Verfahren und Vorrichtung zum Bearbeiten von Informationsträgern, insbesondere zum Auslesen von Speicherleuchtstoffplatten**
Method and device for processing information carriers, in particular for reading out luminescent material storage plates
Procédé et dispositif destinés au traitement de supports d'information, en particulier pour l'extraction de disques fluorescents de mémoire

(43) Veröffentlichungstag der Anmeldung: 05.03.2008
(73) Patentinhaber: Agfa HealthCare NV, 2640 Mortsel (BE)
(72) Erfinder: Zemánek, Vladimir Dr., 81739 München (DE); Gerstlauer, Bernd, 81541 München (DE); Huber, Alfred, 84419 Obertaufkirchen (DE); Zehetmaier, Thomas, 85466 Neufarn (DE)
(74) Vertreter: Linsmeier, Josef

(56) Entgegenhaltungen:
- DE-A1- 10 006 648
- DE-C1- 19 859 747
- JP-A- 2003 284 391

## Beschreibung

Die Erfindung betrifft ein Verfahren sowie eine entsprechende Vorrichtung zum Bearbeiten von Informationsträgern, insbesondere zum Auslesen von Speicherleuchtstoffplatten, gemäß dem Oberbegriff des Anspruchs 1 bzw. 11.

Eine Möglichkeit zur Aufzeichnung von Röntgenbildem besteht darin, die durch ein Objekt, beispielsweise einen Patienten, hindurch tretende Röntgenstrahlung als latentes Bild in einer so genannten Speicherieuchtstoffschicht zu speichern. Zum Auslesen des latenten Bildes wird die Speicherieuchtstoffschicht mit Stimulationslicht bestrahlt und dabei zur Aussendung von Emissionslicht angeregt. Das Emissionslicht, dessen Intensität dem in der Speicherieuehtstoffschicht gespeicherten Bild entspricht, wird von einem optischen Detektor erfasst und In elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Aus EP 1 640 800 A1 ist eine Vorrichtung bekannt, in der zur exakten Bestimmung der Position einer Röntgenkassette sowie eines zu deren Fixierung vorgesehehen Fixierelements ein Lineartaster, ein Kiemmkraftsensor bzw. Lichtschranken vorgesehen sind. Zur Vereinfachung der Steuerung der einzelnen Bearbeitungsprozesse in der Vorrichtung sowie zur Reduktion der Herstellungskosten ist es wünschenswert, die Gesamtzahl von Positionssensoren möglichst gering zu halten.

In DE 198 59 747 C1 wird eine Vorrichtung zum Auslesen von Phosphorschichten beschrieben, bei welcher eine von einem Schritt- oder Linearmotor angetriebene optische Auslesevorrichtung über die Phosphorschicht bewegt wird.

Aus JP 2003-284391 A ist bekannt, beim Betrieb eines Schrittmotors auftretende Schrittveluste mit Hilfe eines Encoders zu erfassen und im Falle des Auftretens von Schrittverlusten den Schrittmotor anzuhalten oder den Schrittveriusten durch eine entsprechende Steuerung der Betriebsspannung oder der Rotationsgeschwindigkeit des Schrittmotors entgegenzuwirken.

DE 100 06 648 A1 offenbar ein Verfahren, bei welchem die Motorlast eines Schrittmotors erfasst und die Zufuhrspannung - und damit die Amplitude des den Schrittmotor antreibenden Stroms - in Abhängigkeit vom erfassten Lastmoment erhöht oder emiedrigt wird.

Es ist Aufgabe der vorliegenden Erfindung, ein Verfahren sowie eine entsprechende Vorrichtung anzugeben, bei welchem bzw. welcher eine möglichst exakte Überprüfung und ggf. Bestimmung der Position mechanischer Bearbeitungsmittel, wie z.B. Elemente zum Fixieren und/oder Transportieren der Kassette bzw. Speicherleuchtstoffplatte, auf vereinfachte und kostengünstigere Weise erreicht wird. Insbesondere soll eine möglichst exakte Positionierung der Bearbeitungsmittel ermöglicht werden.

Diese Aufgabe wird durch das Verfahren gemäß Anspruch 1 sowie die entsprechende Vorrichtung gemäß Anspruch 11 gelöst.

Die Erfindung basiert auf dem Gedanken, ein mechanisches Bearbeitungsmittel durch einen Schrittmotor, der während des Antriebs des Bearbeitungsmittels eine bestimmte Anzahl von Schritten ausführt, anzutreiben und während des Antriebs des Bearbeitungsmittels die Motorlast des Schrittmotors zu erfassen. Erfindungsgemäß wird aus der beim Antrieb des Bearbeitungsmittels ausgeführten Schrittzahl eine Information über die jeweilige Position des Bearbeitungsmittels unter Berücksichtigung der Motorlast abgeleitet. Dabei wird die aufgrund der ausgeführten Schrittzahl zu erwartende Soll-Position des Bearbeitungsmittels anhand der erfassten Motorlast überprüft.

Vorzugsweise wird die Anzahl der während des Antriebs des Bearbeitungsmittels auszuführenden Schritte des Schrittmotors vorgegeben. Zur genauen Bestimmung der während des Antriebs tatsächlich ausgeführten Schrittzahl des Schrittmotors wird diese vorzugsweise während des Antriebs des Bearbeitungsmittels fortlaufend erfasst und zur erfindungsgemäßen Ableitung der Information über die genaue Position des Bearbeitungsmittels unter Berücksichtigung der ebenfalls fortlaufend erfassten Motorlast herangezogen.

Die während des Antriebs des Bearbeitungsmittels erfasste Motorlast wird daraufhin überprüft, ob sie einen vorgegebenen Maximalwert der Motorlast überschreitet. Ist dies nicht der Fall, so entspricht die aus der Schrittzahl abgeleitete Soll-Position auch der Ist-Position des Bearbeitungsmittels. Überschreitet die erfasste Motorlast während des Antriebs des Bearbeitungsmittels dagegen den vorgegebenen Maximalwert, so lässt dies auf Schrittverluste des Schrittmotors während des Antriebs schließen.

Wenn die während des Antriebs des Bearbeitungsmittels erfasste Motorlast den vorgegebenen Maximalwert überschreitet, kann in bestimmten Betriebszuständen, wie z.B. bei einer niedrigen Drehzahl des Schrittmotors, die aus der Schrittzahl abgeleitete Position des Bearbeitungsmittels korrigiert werden, um schließlich die tatsächliche ist-Position des Bearbeitungsmittels zu erhalten.

Durch die Erfindung wird eine exakte Überprüfung und ggf. Bestimmung der jeweiligen Position des Bearbeitungsmittels erreicht. Da die Vorgabe bzw. Erfassung der Schrittzahl, die Erfassung der Motorlast und die nachfolgende Ableitung der jeweiligen Ist-Position des Bearbeitungsmittels unter Berücksichtigung der Motorlast in einer mit dem Schrittmotor verbundenen Steuerungseinheit durchgeführt werden, werden - im Gegensatz zu den aus dem Stand der Technik bekannten Vorrichtungen - keine gesonderten Positionssensoren mehr benötigt, wodurch das Verfahren vereinfacht und die entsprechende Vorrichtung wesentlich kostengüristiger hergestellt werden kann.

In einer bevorzugten Ausgestaltung der Erfindung ist vorgesehen, dass der Schrittmotor in Abhängigkeit von der abgeleiteten Information über die Position des Bearbeitungsmittels gesteuert wird. Auf diese Weise kann z.B. die Rotationsgeschwindigkeit des Schrittmotors und/oder das Drehmoment des Schrittmotors vermindert oder erhöht werden, wenn die ist-Position des Bearbeitungsmittels innerhalb bestimmter Positionen liegt. So kann z.B. zwischen einer Referenzposition einerseits und einer Position in der Nähe einer zu fixierenden Kassette andererseits eine höhere Rotationsgeschwindigkeit und ein niedrigeres Drehmoment des Schrittmotors eingestellt werden als auf dem anschließenden Weg des Bearbeitungsmittels von der genannten Position in der Nähe der Kassette zur Kassette hin. Auf diese Weise kann der Betrieb des Schrittmotors abhängig von der jeweiligen ist-Position des Bearbeitungsmittels an die mit dem Bearbeitungsmittel auszuführende Aktion, wie z. B. das Fixieren oder Transportieren der Kassette bzw. Speicherleuchtstoffplatte, angepasst werden, so dass eine exakte Positionierung des Bearbeitungsmittels und Ausführung der jeweiligen Aktion gewährleistet wird.

Es ist außerdem bevorzugt, dass der Schrittmotor in Abhängigkeit von der erfassten Motorlast gesteuert wird. So kann z.B. bei einer Motorlast, welche einen vorgegebenen Wert überschreitet, die Rotationsgeschwindigkeit des Schrittmotors herabgesetzt und/oder das Drehmoment des Schrittmotors heraufgesetzt werden. Der Betrieb des Schrittmotors kann hierdurch in Abhängigkeit von der jeweils erfassten Motorlast an die mit dem Bearbeitungsmittel durchzuführende Aktion, wie z. B. das Fixieren oder Transportieren der Kassette bzw. Speicherleuchtstoffplatte, exakt angepasst werden.

Erfindungsgemäß wird der Schrittmotor in der Weise gesteuert, dass der Antrieb des Bewegungsmittels ohne Schrittverluste des Schrittmotors erfolgt. Hierzu wird die Motorlast während des gesamten Antriebs in kurzen Zeitabständen, vorzugsweise in Intervallen von einem oder wenigen Motorschritten, fortlaufend detektiert und im Falle einer erhöhten Motorlast, die auf das Eintreten von Schrittverlusten schließen lässt, die Rotationsgeschwindigkeit des Schrittmotors vermindert und/oder das Drehmoment des Schrittmotors erhöht. Durch diese quasikontinuier liche Steuerung des Schrittmotors wird gewährleistet, dass die aus der erfassten Schrittzahl abgeleitete Position des Bearbeitungsmittels der tatsächlichen Ist-Position des Bearbeitungsmittels entspricht. Auf diese Weise wird eine besonders exakte Positionsbestimmung und Positionierung des Bearbeitungsmittels erreicht.

Für den Fall, dass die erfasste Motorlast einen vorgegebenen Maximalwert überschreitet, wird der Schrittmotor in der Weise gesteuert, dass auftretende Schrittverluste beim Antrieb des Bewegungsmittels vermieden werden. Je nach Anwendung und konkreter Situation wird der Schrittmotor hierbei gestoppt und/oder die Rotationsgeschwindigkeit des Schrittmotors vermindert und/oder das Drehmoment des Schrittmotors erhöht. Dies wird am Beispiel der folgenden drei Situationen näher erläutert.
a) Erste Situation: Das Bearbeitungsmittel bewegt sich mit niedriger Geschwindigkeit, wobei eine Zunahme der Motorlast (sog. Überlast) erwartet wird, wie z.B. bei einem Lauf des Bearbeitungsmittels in Richtung auf einen Anschlag. Im Falle der Detektion einer Überlast wird der Antrieb des Schrittmotors sofort gestoppt, was zur Folge hat, dass keine Schrittverluste und damit kein Verlust an Information über die aktuelle Position des Bearbeitungsmittels auftreten. Die Erfindung dient in solchen Fällen zur sensorlose Erkennung oder Suche von End- oder Ausgangspositionen sowie zur sensorlosen Erkennung von Hindernissen oder Schwergängigkeiten beim Antrieb des Bearbeitungsmittels.
b) Zweite Situation: Das Bearbeitungsmittel wird mit höherer Geschwindigkeit bewegt, wobei ebenfalls eine Überlast erwartet wird, wie z.B. aufgrund einer Berührung mit oder einen Anschlag an einer Puffer-Federung. Im Falle der Detektion der Überlast wird die Rotationsgeschwindigkeit des Motors, und damit des Antriebs, reduziert und/oder das Drehmoment des Schrittmotors erhöht, wodurch Schrittverluste und damit der Verlust an Information über die wirkliche Position des Bearbeitungsmittels vermieden werden. In diesem und vergleichbaren Fällen dient die Erfindung zur sensorlosen Berührungserkennung, wie z.B. bei der Kassettenformaterkennung, und sensorlosen Schwergängigkeitserkennung.
c) Dritte Situation: Das Bearbeitungsmittel wird mit höherer Geschwindigkeit bewegt, wobei keine Überlast erwartet wird. Im Falle der Detektion einer Überiast wird der Antrieb sofort gestoppt oder innerhalb eines bestimmten, kurzen Zeitintervalls abgebremst und schließlich gestoppt (sog. "Deceleration Stopp"). Auf diese Weise werden mögliche Schrittverluste stark begrenzt. Darüber hinaus kann anschließend mit dem im Zusammenhang mit der ersten Situation beschriebenen Verfahren die Ausgangsposition des Bearbeitungsmittels wieder gefunden und die Bewegung erneut durchgeführt wer(sog. "Retry-Bewegung"). In diesen Fällen dient die Erfindung als sensorlose Hinderniserkennung.

Zur Steuerung des Schrittmotors werden vorzugsweise die durch den Schrittmotor fließenden elektrischen Ströme in Abhängigkeit von der abgeleiteten Information über die Position des Bearbeitungsmittels und/oder in Abhängigkeit von der erfassten Motorlast vorgegeben. Hierbei handelt es sich um periodische, insbesondere cosinus- und/oder sinusförmige, Wechselstromsequenzen, die jeweils eine Frequenz, eine Amplitude und eine bestimmte Anzahl von Perioden aufweisen. Die Frequenz und/oder Amplitude und/oder Anzahl von Perioden der Wechselströme wird hierbei jeweils in Abhängigkeit von der abgeleiteten Position des Bearbeitungsmittels und/oder der Motorlast vorgegeben, wodurch die Rotationsgeschwindigkeit, das Drehmoment bzw. die jeweilige Soll-Position des Bearbeitungsmittels gesteuert wird. Auf diese Weise lässt sich die Position und Bewegung des Bearbeitungsmittels auf exakte Weise gezielt an die bei der Durchführung einzelner Aktionen, wie z. B. das Fixieren und/oder Transportieren der Kassette bzw. Speicherleuchtstoffplatte, erforderlichen Gegebenheiten anpassen.

Die Erfindung ist in allen Vorrichtungen und Verfahren von Vorteil, in denen die Positionierung und Positionsbestimmung von Bearbeitungsmitteln bei einem Minimum an separaten Positionssensoren auf einfache und exakte Weise erfolgen soll. Hierunter fallen insbesondere Vorrichtungen und Verfahren, in denen Informationen mit Laserstrahlen auf Informationsträger geschrieben werden, wie z.B. bei Druckern oder anderen sog. Hardcopy-Systemen, sowie beim Belichten von Druckplatten.

In besonders vorteilhafter Weise wird die Erfindung bei Auslesen von Speicherleuchtstoffplatten eingesetzt. Als Informationsträger dient hierbei eine Speicherleuchtstoffplatte zur Speicherung von Röntgeninformation, wobei die Speicherleuchtstoffplatte und/oder eine Kassette, in welcher sich die Speicherleuchtstoffplatte befindet, durch das mechanische Bearbeitungsmittel bearbeitet, insbesondere bewegt und/oder fixiert, wird, und die in der Speicherleuchtstoffplatte gespeicherte Röntgeninformation ausgelesen wird.

Die Erfindung sowie weitere bevorzugte Ausgestaltungen der Erfindung werden nachfolgend anhand von Figuren näher beschrieben. Es zeigen:
- Fig. 1: ein erstes Ausführungsbeispiel zur Veranschaulichung der Erfindung;
- Fig. 2: einen Ausschnitt des in Fig. 1 gezeigten ersten Ausführungsbeispiels zu einem anderen Zeitpunkt;
- Fig. 3: einen Schrittmotor mit nachgeschalteter Steuerungseinheit;
- Fig. 4: ein zweites Ausführungsbeispiel zur Veranschaulichung der Erfindung; und
- Fig. 5: das in Fig. 4 gezeigte zweite Ausführungsbeispiel zu einem anderen Zeitpunkt.

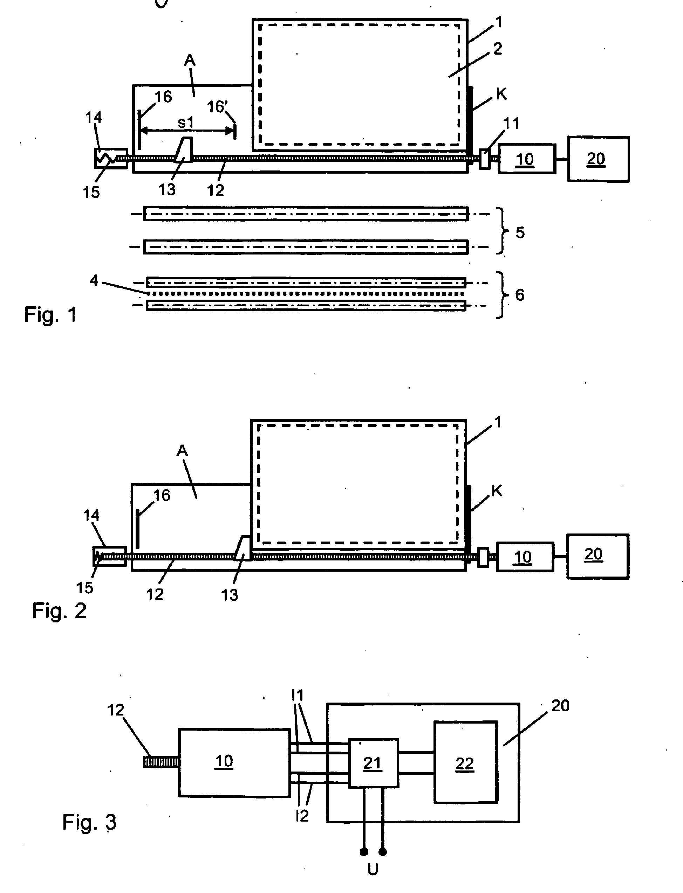

Fig. 1 zeigt ein erstes Ausführungsbeispiel einer Vorrichtung zur Durchführung des erfindungsgemäßen Verfahrens. Eine Kassette 1 mit einer darin befindlichen Speicherleuchtstoffplatte 2 wird durch einen Bediener auf einer Ablage A abgelegt und an einer Anschlagkante K auf Anschlag gebracht.

Zum Auslesen der in der Speicherleuchtstoffschicht 2 gespeicherten Röntgeninformation wird die Kassette 1 geöffnet und die Speicherleuchtstoffplatte 2 durch eine nicht näher dargestellte Entnahmeeinrichtung aus der Kassette 1 entnommen und an eine Transporteinrichtung 5 übergeben, die in dem hier dargestellten Beispiel zwei Walzenpaare umfasst, welche die Speicherleuchtstoffplatte 2 einer Ausleseeinrichtung 6 zuführen.

Die Ausleseeinrichtung 6 umfasst in dem dargestellten Beispiel zwei weitere Walzenpaare, welche die Speicherleuchtstoffplatte 2 durch eine Ausleseeinheit transportieren, in welcher die Speicherleuchtstoffplatte 2 mittels Stimulationslicht zur Aussendung von Emissionslicht angeregt wird, das durch einen optischen Detektor (nicht dargestellt) erfasst wird. Das Auslesen der Speicherleuchtstoffplatte 2 erfolgt hierbei zeilenweise, wobei einzelne Punkte einer Zeile 4 jeweils nacheinander - wie bei sog. Flying Spot-Scannern - oder gleichzeitig - wie bei sog. Zeilenscannern - mit Stimulationslicht bestrahlt werden. Der Aufbau entsprechender Ausleseeinheiten ist z.B. in EP 1 065 523 A2 bzw. EP1 034 443 B1 beschrieben.

Im Bereich der Ablage A ist ein Fixierelement 13 vorgesehen, welches durch eine Gewindestange 12 auf die Kassette 1 hin- bzw. von der Kassette 1 wegbewegt werden kann. Im gezeigten Beispiel ist das Fixierelement 13 ein Klemmkeil mit einem Schraubengewinde, über welches der Klemmkeil mit der Gewindestange 12 gekoppelt ist und von dieser verschoben werden kann.

Ein erstes Ende der Gewindestange 12 ist über eine Kupplung 11 mit einem Schrittmotor 10 gekoppelt und wird von diesem angetrieben, d.h. in Rotation versetzt. Ein zweites Ende der Gewindestange 12 ist in einem Lager 14 drehbar gelagert und durch eine Feder 15 axial in Richtung des Schrittmotors 10 vorgespannt.

Der Schrittmotor 10 wird in diesem Beispiel durch die Steuerungseinheit 20 in der Weise gesteuert, dass das Fixierelement 13 auf einer ersten Wegstrecke s1 zwischen einer Referenzposition 16 und einer Position 16' in der Nähe der Kassette 1 mit einer hohen Geschwindigkeit bewegt wird. Dies wird durch den Betrieb des Schrittmotors 10 mit elektrischen Wechselströmen einer hohen Frequenz erreicht.

Aus der Anzahl von Schritten, welche der Schrittmotor 10 für die Bewegung des Fixierelements 13 zurücklegt, wird in einer mit den Schrittmotor 10 verbundenen Steuerungseinheit 20 eine Information über die jeweilige Position des Fixierelements 13 in Bezug auf die Referenzposition 16 errechnet.

Neben der Schrittzahl des Schrittmotors 10 wird in der Steuerungseinheit 20 zusätzlich die Motorlast des Schrittmotors 10 erfasst, die ein Maß für die Last des Schrittmotors 10 während der Bewegung des Fixierelements 13 darstellt. Erfindungsgemäß wird die Position des Fixierelements 13 aus der Schrittzahl des Schrittmotors 10 berechnet und anhand der erfassten Motorlast überprüft und ggf. korrigiert.

Ergibt beispielsweise die Überprüfung, dass die erfasste Motorlast einen vorgegebenen Maximalwert überschreitet, so kann hieraus auf die Anwesenheit eines Hindernisses, beispielsweise die Hand eines Bedieners, geschlossen werden. In diesem Fall wird der Schrittmotor 10 sofort gestoppt.

Es kann auch vorkommen, dass die Kassette 1 durch einen Bediener nicht exakt an die Anschlagkante K gelegt wird, wodurch das zur Kassette 1 hin bewegte Fixierelement 13 vorzeitig mit der Kassette 1 in Berührung kommt und diese über eine bestimmte Wegstrecke so lange schiebt, bis die Kassette 1 an der Anschlagsleiste 4 anliegt. Auf dieser Wegstrecke treten im Schrittmotor 10 Schrittverluste auf, durch welche die von der Referenzposition 16 an zurückgelegte Strecke s1 des Fixierelements 13 nicht mehr proportional zur erfassten Anzahl der Schrittzahl ist. Eine exakte Positionsbestimmung des Fixierelements 13 allein aus der Schrittzahl ist dadurch nicht mehr möglich. Erfindungsgemäß wird zur Überprüfung der exakten Ist-Position des Fixierelements 13 die erfasste Motorlast herangezogen.

Im vorliegenden Beispiel wird auf der Wegstrecke, auf welcher die Kassette 1 durch das Fixierelement zur Anschlagsleiste 4 geschoben wird, eine erhöhte Motorlast detektiert, welche auf Schrittverluste des Schrittmotors 10 schließen lässt. In diesem Fall wird der Schrittmotor 10 in der Weise gesteuert, dass auftretende Schrittverluste beim Antrieb des Fixierelements 13 vermieden oder zumindest vermindert werden. Im gezeigten Beispiel wird die Rotationsgeschwindigkeit des Schrittmotors 10 vermindert und/oder das Drehmoment des Schrittmotors 10 erhöht.

Wenn die während des Antriebs des Fixierelements 13 erfasste Motorlast einen vorgegebenen Maximalwert überschreitet, kann in bestimmten Betriebszuständen, wie z.B. bei einer niedrigen Drehzahl des Schrittmotors 10, die aus der Schrittzahl abgeleitete Position des Fixierelements 13 auch korrigiert werden, um schließlich die tatsächliche Ist-Position des Fixierelements 13 zu erhalten. Die aus der erfassten Schrittzahl errechnete Soll-Position des Fixierelements 13 kann hierbei z.B. abhängig von der jeweils erfassten Höhe der Motorlast nach unten korrigiert werden, um die jeweilige exakte Ist-Position des Fixierelements 13 zu ermitteln.

Fig. 2 zeigt einen Ausschnitt des in Fig. 1 dargestellten ersten Ausführungsbeispiels in einem Zeitpunkt, in welchem die Kassette 1 durch das Fixierelement 13 fixiert ist. Kurz vor dem dargestellten Zeitpunkt wurde die Gewindestange 12 aufgrund der Bewegung des bereits an der Kassette 1 anliegenden Fixierelements 13 in axialer Richtung in das Lager 14 geführt, wobei die Feder 15 zusammengedrückt wurde.

In der Phase des Zusammendrückens der Feder 15 wird in der Steuerungseinheit 20 eine erhöhte Motorlast des Schrittmotors 10 detektiert, die aufgrund der definierten mechanischen Eigenschaften der Feder 15 innerhalb eines charakteristischen Wertebereichs liegt. Vorzugsweise wird der Schrittmotor 10 in dieser Phase so gesteuert, dass dessen Rotationsgeschwindigkeit herabgesetzt und das Drehmoment heraufgesetzt wird. Auf diese Weise werden einerseits Schrittverluste vermieden oder zumindest vermindert und andererseits eine besonders sichere und ausreichend starke Klemmung der Kassette 1 ermöglicht.

Fig. 3 zeigt den im ersten Ausführungsbeispiel eingesetzten Schrittmotor 10, der die Gewindestange 12 antreibt. Die mit dem Schrittmotor 10 verbundene Steuereinheit 20 umfasst einen Motortreiber 21 zur Detektion der Schrittzahl und der Motorlast sowie zur Steuerung des Schrittmotors 10. In einer Auswertungseinheit 22 werden aus der Schrittzahl und der Motorlast die jeweilige exakte Ist-Position des Fixierelements 13 abgeleitet und Steuerparameter zur Steuerung des Antriebs des Schrittmotors 10 an den Motortreiber 21 gesendet. Der Motortreiber 21 ist an einer Gleichspannungsquelle mit einer Spannung U angeschlossen.

Durch den Motortreiber 21 werden Wechselströme 11 und 12 vorgegeben, mit denen der Schrittmotor 10 betrieben wird. Hierbei handelt es sich um cosinus- und/oder sinusförmige Wechselstromsequenzen, wobei durch Vorgabe der Frequenz der Wechselströme die Rotationsgeschwindigkeit des Schrittmotors 10 gesteuert werden kann. Durch Vorgabe der Amplitude der Wechselströme I1 bzw. I2 kann das Drehmoment des Schrittmotors 10 eingestellt werden. Über die Anzahl der Perioden in einzelnen Wechselstromsequenzen wird die jeweils auszuführende Schrittzahl des Schrittmotors 10 vorgegeben. Erfindungsgemäß erfolgt die Auswahl und Vorgabe der oben genannten Größen in Abhängigkeit der erfassten Schrittzahl, welche ein Maß für die Soll-Position des Fixierelements 13 darstellt, und/oder der erfassten Motorlast.

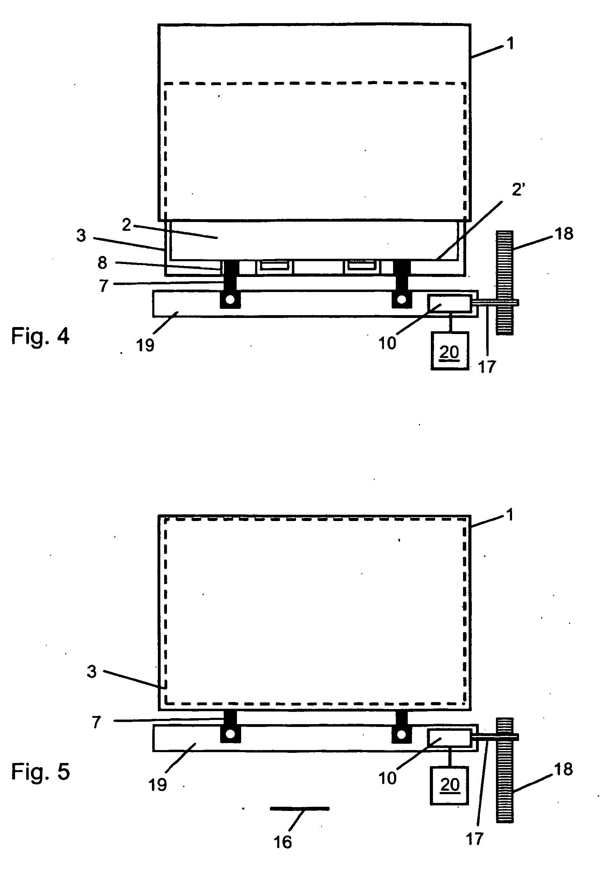

Fig. 4 zeigt ein zweites Ausführungsbeispiel der Erfindung, bei welchem eine auf einer Auflage 3 befindliche Speicherleuchtstoffplatte 2 zusammen mit der Auflage 3 in eine Kassette 1 geschoben wird. Hierzu ist eine Leiste 19 mit Führungsstiften 7 vorgesehen, welche in Ausnehmungen 8 in der Auflage 3 einfahren, bis sie in Anschlag mit der Führungskante 2' der Speicherleuchtstoffplatte 2 sind. An der Leiste 19 ist ein Schrittmotor 10 angebracht, der eine Zahnwelle 17 antreibt, die entlang einer relativ zur Kassette 1 ortsfest angeordneten Zahnstange 18 läuft und dabei die Leiste 19 zusammen mit den Führungsstiften 7 zur Kassette 1 hin bzw. von der Kassette 1 weg bewegen kann.

Für die erfindungsgemäße exakte Bestimmung der Position der Führungsstifte 7 relativ zu einer Referenzposition 16 gelten die vorstehenden Ausführungen im Zusammenhang mit den in den Figuren 1 bis 3 dargestellten Beispielen entsprechend.

Der Schrittmotor 10 wird in diesem Beispiel durch die Steuerungseinheit 20 in der Weise gesteuert, dass sich die Führungsstifte 7 anfangs mit einer hohen Geschwindigkeit schnell auf die Ausnehmungen 8 zu bewegen und die Geschwindigkeit des Schrittmotors 10 vermindert wird, wenn die Führungsstifte 7 eine vorgebbare Position nahe der Auflage 3 erreicht haben. Die Führungsstifte 7 werden dann mit einer gegenüber der anfänglichen Geschwindigkeit verminderten Geschwindigkeit in die Ausnehmungen 8 eingefahren und schieben schließlich die Auflage 3 zusammen mit der darauf befindlichen Speicherleuchtstoffplatte 2 in die Kassette 1.

Durch die sukzessive, quasikontinuierliche Erfassung der Motorlast des Schrittmotors 10 kann hierbei festgestellt werden, ob die Auflage 3 - wie in Fig. 5 dargestellt - bereits vollständig in die Kassette 1 eingeschoben ist und an die gegenüberliegende Stirnseite der Kassette oder an einen dort befindlichen Anschlag anstößt. In diesem Fall wird in der Steuerungseinheit 20 eine hohe Motorlast detektiert und unmittelbar darauf der Rücktransport der Auflage 3 bzw. Speicherleuchtstoffplatte 2 in die Kassette 1 beendet, indem die Rotation des Schrittmotors 10 gestoppt wird.

Auf diese Weise wird eine sichere und exakte Rückführung der Auflage 3 zusammen mit der darauf befindlichen Speicherleuchtstoffplatte 2 in die Kassette 1 erreicht.

Nach einer Fixierung der Auflage 3 zusammen mit der Speicherleuchtstoffplatte 2 in der Kassette 1 kann nun der Schrittmotor 10 in gegenläufiger Rotationsrichtung mit relativ hoher Geschwindigkeit betrieben werden, um die Leiste 19 zusammen mit den Führungsstiften 7 wieder in Referenzposition 16 zu bringen. Auch diese Bewegung wird zunächst mit hoher Geschwindigkeit und in der Nähe der Referenzposition 16 mit verminderter Geschwindigkeit durchgeführt. Durch die sukzessive Erfassung der Motorlast und deren Berücksichtigung sowohl bei der Ermittlung der Ist-Position der Leiste 19 als auch bei der Steuerung des Schrittmotors 10 wird gewährleistet, dass die Referenzposition 16 mit hoher Sicherheit und Genauigkeit angefahren und schließlich erreicht wird.

In den vorstehend näher beschriebenen Ausführungsbeispielen wurden lediglich zwei Möglichkeiten dargestellt, bei denen Bearbeitungsmittel, wie das Fixierelement 13 bzw. die Führungsstifte 7, in erfindungsgemäßer Weise beim Bearbeiten und Auslesen von Speicherleuchtstoffplatten betrieben werden können. Darüber hinaus gibt es zahlreiche weitere Möglichkeiten, die beschriebene Erfindung einzusetzen.

So kann beispielsweise der Abstand der Walzen von Walzenpaaren, wie in der in Fig. 1 gezeigten Transporteinrichtung 5, mittels einer Kulissenführung eingestellt werden, die ihrerseits durch einen in erfindungsgemäßer Weise betriebenen Schrittmotor angetrieben wird.

Weitere Beispiele für den Einsatz der Erfindung sind der Antrieb von Mitteln zum Öffnen und Schließen einer an der Stirnseite der Kassette befindlichen Klappe, von Mechanismen zur Fixierung und Freigabe der Speicherleuchtstoffplatte in der Kassette und von Einrichtungen zum Transport der Speicherleuchtstoffplatte durch die Vorrichtung, insbesondere durch die Ausleseeinheit, wie z.B. Walzen, Gewindestangen oder Seilzüge.

Im Allgemeinen kann die Erfindung bei der Durchführung und Steuerung jeglicher mechanischer Vorgänge im Zusammenhang mit dem Bearbeiten von Informationsträgern in vorteilhafter Weise eingesetzt werden. Neben einer exakten Positionsbestimmung und Steuerung von mechanischen Bearbeitungsmitteln, wie z. B. Fixier- und/oder Transportelementen, hat die Erfindung den weiteren Vorteil, dass auf eine Vielzahl unterschiedlichster Sensoren zur Positionsbestimmung bzw. Steuerung mechanischer Bearbeitungsmittel verzichtet werden kann. Die Herstellungskosten entsprechender Systeme werden hierdurch erheblich reduziert.

## Patentansprüche

1. Verfahren zum Bearbeiten von Informationsträgern (2), wobei
- ein Informationsträger (2) und/oder ein Behälter (1), in welchem sich der Informationsträger (2) befindet, durch mindestens ein mechanisches Bearbeitungsmittel (7, 13) bearbeitet, insbesondere bewegt und/oder fixiert, wird, wobei das Bearbeitungsmittel (7, 13) von mindestens einem Schrittmotor (10) angetrieben wird, und
- Information aus dem Informationsträger (2) ausgelesen und/oder in den Informationsträger (2) geschrieben wird,
**dadurch gekennzeichnet, dass**
während des Antriebs des Bearbeitungsmittels (7, 13) eine Motorlast erfasst wird, welche ein Maß für die Last des Schrittmotors (10) während des Antriebs des Bearbeitungsmittels (7, 13) darstellt, und aus einer Schrittzahl, weiche der Anzahl von Schritten des Schrittmotors (10) während des Antriebs des Bearbeitungsmitteis (7, 13) entspricht, eine Information über die Position des Bearbeitungsmittels (7,13) unter Berücksichtigung der erfassten Motorlast abgeleitet wird, wobei in dem Fall, dass die erfasste Motorlast einen vorgegebenen Maximalwert der Motorlast überschreitet.
- die aufgrund der ausgeführten Schrittzahl zu erwartende Soll-Position des Bearbeitungsmittels (7, 13) anhand der erfassten Motorlast korrigiert und dabei die tatsächliche Ist-Position des Bearbeitungsmittels (7, 13) ermittelt wird oder
- der Schrittmotor (10) gestoppt wird, so dass keine Schrittverluste auftreten.

2. Verfahren nach Anspruch 1, wobei der Schrittmotor (10) in Abhängigkeit von der abgeleiteten Information über die Position des Bearbeitungsmittels (7, 13) gesteuert wird.

3. Verfahren nach Anspruch 2, wobei die Rotationsgeschwindigkeit des Schrittmotors (10) und/oder das Drehmoment des Schrittmotors (10) vermindert oder erhöht werden, wenn die Position des Bearbeitungsmittels (7, 13) innerhalb bestimmter Positionen liegt.

4. Verfahren nach Anspruch 3, wobei die Rotationsgeschwindigkeit des Schrittmotors (10) höher ist, wenn sich das Bearbeitungsmittel (7, 13) zwischen einer Referenzposition (16) und einer Position (16) in der Nähe des Informationsträgers (2) bzw. Behälters (1) befindet, als auf dem anschließenden Weg des Bearbeitungsmittels (7, 13) von der Position (16') in der Nähe des Informationsträgers (2) bzw. Behälters (1) zum informationsträger (2) bzw. Behälter (1) hin.

5. Verfahren nach Anspruch 3 oder 4, wobei das Drehmoment des Schrittmotors (10) niedriger ist, wenn sich das Bearbeitungsmlttel (7, 13) zwischen einer Referenzposition (16) und einer Position (16') in der Nähe des Informationsträgers (2) bzw. Behälters (1) befindet als auf dem anschließende Weg des Bearbeitungsmitteis (7.13) von der Position (16') in der Nähe des Informationsträgers (2) bzw. Behälters (1) zum Informationsträger (2) bzw. Behälter (1) hin.

6. Verfahren nach einem der vorangehenden Ansprüche, wobei die Anzahl der Schritte, die der Schrittmotor (10) während des Antriebs des Bearbeitungsmittels (7.13) auszuführen hat, vorgegeben wird.

7. Verfahren nach einem der vorangehenden Ansprüche, wobei die Schrittzahl der während des Antriebs des Bearbeitungsmittels (7, 13) ausgeführten Schritte des Schrittmotors (10) während des Antriebs des Bearbeitungsmittels.(7, 13) erfasst wird.

8. Verfahren nach einem der Ansprüche 2 bis 7, wobei zur Steuerung des Schrittmotors (10) elektrische Strömt (11, 12) durch den Schrittmotor (10) in Abhängigkeit von der abgeleiteten information über die Position des Bearbeitungsmittels (7, 13) bzw. in Abhängigkeit von der erfassten Motorlast vorgegeben werden.

9. Verfahren nach Anspruch 8, wobei die elektrischen Strömt (I1, 12) durch den Schrittmotor (10) periodische, insbesondere cosinus- und/oder sinusförmige. Wechselströme sind, die jeweils eine Frequenz, eine Amplitude und eine bestimmte Anzahl von Perioden aufweisen, und die Frequenz und/oder Amplitude und/oder Anzahl von Perioden der Wechselströme jeweils in Abhängigkeit von der abgeleiteten Information über die Position des Bearbeitungsmittels (7, 13) bzw. in Abhängigkeit von der erfassten Motorlast vorgegeben werden.

10. Verfahren nach einem der vorangehenden Ansprüche, wobei der Informationsträger (2) eine Speicherieuchtstoffptatte (2) zur Speicherung von Röntgeninformation ist und die Speicheriuchtstoffpltte (2) und/oder eine Kassette (1), in welcher sich die Speicherleuchtstoffplatte (2) befindet, durch das mechanische Bearbeitungsmittel (7, 13) bearbeitet, insbesondere bewegt und/oder fixiert, wird, und die in der Speicherleuchtstoffplatte (2) gespeicherte Röntgeninformation ausgelesen wird.

11. Vorrichtung zum Bearbeiten von Informationsträgern (2) mit
- mindestens einem mechanischen Bearbeitungsmittel (7, 13) zum Bearbeiten, insbesondere zum Bewegen und/oder Fixieren, eines Inforrnationsträgers (2) und/oder eines Behälters (1), in weichem sich der Informationsträger (2) befindet,
- mindestens einem Schrittmotor (10), durch welchen das Bearbeitungsmittel (7.13) angetrieben wird, und
- einer Einrichtung (6) zum Auslesen und/oder Schreiben von informationen aus bzw. in den Informationsträger (2),
**gekennzeichnet durch** eine Steuerungseinheit (20) zur Erfassung einer Motoriast, welche ein Maß für die Last des Schrittmotors (10) während des Antriebs des Bearbeitungsmittels (7, 13) darstellt, und Ableitung einer Information über die Position des Bearbeitungsmittels (7, 13) aus einer Schrittzahl, weiche der Anzahl von Schritten des Schrittmotors (10) während des Antriebs des Bearbeitungsmittels (7, 13) entspricht, unter Berücksichtigung der erfassten Motorlast, wobei in dem Fall, dass die erfasste Motorlast einen vorgegebenen Maximalwert der Motorlast überschreitet,
- die aufgrund der ausgeführten Schrittzahl zu erwartende Soll-Position des Bearbeitungsmittets (7, 13) anhand der erfassten Motorlast korrigiert und dabei die tatsächliche ist-Position des Bearbeitungsmittets (7. 13) ermittelt wird oder
- der Schrittmotor (10) gestoppt wird, so dass keine Schrittverluste auftreten.

12. Vorrichtung nach Anspruch 11, wobei
- der Informationsträger (2) eine Speicherieuchtstoffpiatte (2) zur Speicher rung von Ri3ntgeninformation ist und die Speicherieuchtstofiptatte (2) und/oder eine Kassette (1), in welcher sich die Speicherleuchtstoflplatte (2) befindet, durch das mechanische Bearbeitungsmittel (7, 13) bearbeitet, insbesondere bewegt und/oder fixiert, wird, und
- eine Ausleseeinrichtung (6) zum Auslesen der in der Speicherleuchtstoffplatte (2) gespeicherten Röntgeninformation vorgesehen ist.

## Claims

1. A method for the processing of information carriers (2),
- an information carrier (2) and/or a container (1) in which the information carrier (2) is located being processed, in particular being moved and/or fixed, by at least one mechanical processing means (7, 13), the processing means (7, 13) being driven by at least one stepper motor (10), and
- information being read out from the information carrier (2) and/or being written into the information carrier (2),
**characterised in that**
during actuation of the processing means (7, 13) a motor load is recorded which represents a measurement for the load of the stepper motor (10) during actuation of the processing means (7, 13), and from a step number which corresponds to the number of steps of the stepper motor (10) during actuation of the processing means (7, 13), information about the position of the processing means (7, 13) is deduced taking into account the motor load recorded, in the event that the motor load recorded exceeds a pre-specified maximum value of the motor load
- the desired position of the processing means (7, 13) to be anticipated upon the basis of the number of steps implemented being corrected by means of the motor load recorded, and the actual current position of the processing means (7, 13) thus being established, or
- the stepper motor (10) being stopped so that no step losses occur.

2. The method according to Claim 1, the stepper motor (10) being controlled dependently upon the information deduced regarding the position of the processing means (7, 13).

3. The method according to Claim 2, the rotation speed of the stepper motor (10) and/or the torque of the stepper motor (10) being decreased or increased when the position of the processing means (7, 13) comes within specific positions.

4. The method according to Claim 3, the rotation speed of the stepper motor (10) being higher when the processing means (7, 13) is located between a reference position (16) and a position (16') close to the information carrier (2) or container than on the adjacent path of the processing means (7, 13) from the position (16') close to the information carrier (2) or container (1) to the information carrier (2) or container (1).

5. The method according to Claim 3 or 4, the torque of the stepper motor (10) being lower when the processing means (7, 13) is located between a reference position (16) and a position (16') close to the information carrier (2) or container (1) than on the adjacent path of the processing means (7, 13) from the position (16') close to the information carrier (2) or container (1) to the information carrier (2) or container (1).

6. The method according to any of the preceding claims, the number of steps which the stepper motor (10) is to implement during actuation of the processing means (7, 13) being pre-specified.

7. The method according to any of the preceding claims, the number of steps for the steps of the stepper motor (10) implemented during actuation of the processing means (7, 13) being recorded during actuation of the processing means (7, 13).

8. The method according to any of Claims 2 to 7, in order to control the stepper motor (10) electric currents (11, 12) through the stepper motor (10) being pre-specified dependently upon the information deduced regarding the position of the processing means (7, 13) or dependently upon the motor load recorded.

9. The method according to Claim 8, the electric currents (11, 12) through the stepper motor (10) being periodic, in particular cosinusoidal and/or sinusoidal alternating currents which respectively have a frequency, an amplitude and a specific number of periods, and the frequency and/or amplitude and/or number of periods of the alternating currents respectively being pre-specified dependently upon the information deduced regarding the position of the processing means (7, 13) or dependently upon the motor load recorded.

10. The method according to any of the preceding claims, the information carrier (2) being a storage phosphor plate (2) for the storage of X-ray information, and the storage phosphor plate (2) and/or a cassette (1) in which the storage phosphor plate (2) is located being processed, in particular being moved and/or fixed, by the mechanical processing means (7, 13), and the X-ray information stored in the storage phosphor plate (2) being read out.

11. An apparatus for the processing of information carriers having
- at least one mechanical processing means (7, 13) for processing, in particular for moving and/or fixing, an information carrier (2) and/or a container (1) in which the information carrier (2) is located,
- at least one stepper motor (10) by means of which the processing means (7, 13) is driven,
- and a device (6) for reading out and/or writing information from or into the information carrier (2),
**characterised by** a control device (20) for recording a motor load which represents a measurement for the load of the stepper motor (10) during actuation of the processing means (7, 13) and for deducing information about the position of the processing means (7, 13) from a number of steps which corresponds to the number of steps of the stepper motor (10) during actuation of the processing means (7, 13), taking into account the motor load recorded, in the event that the motor load recorded exceeds a pre-specified maximum value of the motor load
- the desired position of the processing means (7, 13) to be anticipated upon the basis of the number of steps implemented being corrected by means of the motor load recorded and the actual current position of the processing means (7, 13) thus being established, or
- the stepper motor (10) being stopped so that no step losses occur.

12. The apparatus according to Claim 11,
- the information carrier (2) being a storage phosphor layer (2) for the storage of X-ray information, and the storage phosphor plate (2) and/or a cassette (1) in which the storage phosphor plate (2) is located being processed, in particular being moved and/or fixed, by the mechanical processing means (7, 13), and
- a read-out device (6) for reading out the X-ray information stored in the storage phosphor plate (2) being provided.

## Revendications

1. Procédé de traitement de supports d'informations (2), dans lequel
- un support d'informations (2) et/ou un contenant (1) dans lequel se trouve le support d'informations (2) sont traités par au moins un moyen de traitement mécanique (7, 13), en étant notamment déplacés et/ou fixés, le moyen de traitement (7, 13) étant entraîné par au moins un moteur pas-à-pas (10), et
- une information est lue à partir du support d'informations (2) et/ou écrite dans ce support d'informations (2),
**caractérisé en ce que**
une charge du moteur est relevée au cours de l'entraînement du moyen de traitement (7, 13), représentant un étalon pour la charge du moteur pas-à-pas (10) au cours de l'entraînement du moyen de traitement (7, 13), et une information relative à la position du moyen de traitement (7, 13) est dérivée d'un nombre de pas correspondant au nombre de pas du moteur pas-à-pas pendant l'entraînement du moyen de traitement (7, 13) en tenant compte de la charge du moteur relevée, et, au cas où la charge du moteur relevée dépasse une valeur maximale prédéterminée, il s'effectue
- une correction, faisant intervenir la charge du moteur relevée, de la position de consigne du moyen de traitement (7, 13) escomptée étant donné le nombre de pas réalisés, ce qui permet de déterminer effectivement la position réelle du moyen de traitement (7, 13), ou
- un arrêt du moteur pas-à-pas (10) de sorte à éviter l'apparition de pertes de pas.

2. Procédé selon la revendication 1, dans lequel le moteur pas-à-pas (10) est commandé en fonction de l'information dérivée relative à la position du moyen de traitement (7, 13).

3. Procédé selon la revendication 2, dans lequel la vitesse de rotation du moteur pas-à-pas (10) et/ou le couple du moteur pas-à-pas (10) sont réduits ou augmentés lorsque le moyen de traitement (7, 13) se trouve dans des positions précises.

4. Procédé selon la revendication 3, dans lequel la vitesse de rotation du moteur pas-à-pas (10) est plus élevée lorsque le moyen de traitement (7, 13) se trouve entre une position de référence (16) et une position (16') proche du support d'informations (2) ou du contenant (1), qu'elle ne l'est sur la suite du trajet du moyen de traitement (7, 13), de la position (16') proche du support d'informations (2) ou du contenant (1) au support d'informations (2) ou contenant (1).

5. Procédé selon la revendication 3 ou 4, dans lequel le couple du moteur pas-à-pas (10) est plus faible lorsque le moyen de traitement (7, 13) se trouve entre une position de référence (16) et une position (16') proche du support d'informations (2) ou du contenant (1), qu'il ne l'est sur la suite du trajet du moyen de traitement (7, 13), de la position (16') proche du support d'informations (2) ou du contenant (1) au support d'informations (2) ou contenant (1).

6. Procédé selon l'une des revendications précédentes, dans lequel on prédéfinit le nombre des pas que le moteur pas-à-pas (10) doit effectuer au cours de l'entraînement du moyen de traitement (7, 13).

7. Procédé selon l'une des revendications précédentes, dans lequel le nombre des pas effectués par le moteur pas-à-pas (10) au cours de l'entraînement du moyen de traitement (7, 13) est relevé au cours de l'entraînement du moyen de traitement (7, 13).

8. Procédé selon l'une des revendications 2 à 7, dans lequel, pour commander le moteur pas-à-pas (10), on prédéfinit des courants électriques (11, 12) traversant le moteur pas-à-pas (10) en fonction de l'information dérivée relative à la position du moyen de traitement (7, 13) ou en fonction de la charge du moteur relevée.

9. Procédé selon la revendication 8, dans lequel les courants électriques (11, 12) traversant le moteur pas-à-pas (10) sont des courants alternatifs périodiques, notamment sinusoïdaux et/ou cosinusoïdaux, présentant chacun une fréquence, une amplitude et un certain nombre de périodes, et la fréquence et/ou l'amplitude et/ou le nombre de périodes des courants alternatifs sont respectivement prédéfinis en fonction de l'information dérivée relative à la position du moyen de traitement (7, 13) ou en fonction de la charge du moteur relevée.

10. Procédé selon l'une des revendications précédentes, dans lequel le support d'informations (2) consiste en une plaque luminescente à mémoire (2) destinée à l'enregistrement d'informations radiographiques et la plaque luminescente à mémoire (2) et/ou une cassette (1) dans laquelle se trouve la plaque luminescente à mémoire (2) sont traitées par le moyen de traitement mécanique (7, 13), en étant notamment déplacées et/ou fixées, et les informations radiographiques enregistrées dans la plaque luminescente à mémoire (2) sont lues.

11. Dispositif de traitement de supports d'informations (2) comportant
- au moins un moyen de traitement mécanique (7, 13) destiné à traiter, notamment à déplacer et/ou à fixer, un support d'informations (2) et/ou un contenant (1) dans lequel se trouve le support d'informations (2),
- au moins un moteur pas-à-pas (10) permettant d'entraîner le moyen de traitement (7, 13), et
- un dispositif (6) de lecture et/ou d'écriture d'informations sur le support d'informations (2),
**caractérisé par** une unité de commande (20) destinée à relever une charge de moteur représentant un étalon pour la charge du moteur pas-à-pas (10) au cours de l'entraînement du moyen de traitement (7, 13), et à dériver une information relative à la position du moyen de traitement (7, 13) à partir d'un nombre de pas correspondant au nombre de pas du moteur pas-à-pas (10) pendant l'entraînement du moyen de traitement (7, 13) en tenant compte de la charge du moteur relevée, et, au cas où la charge du moteur relevée dépasse une valeur maximale prédéterminée, il s'effectue
- une correction, faisant intervenir la charge du moteur relevée, de la position de consigne du moyen de traitement (7, 13) escomptée étant donné le nombre de pas réalisés, ce qui permet de déterminer effectivement la position réelle du moyen de traitement (7, 13), ou
- un arrêt du moteur pas-à-pas (10) de sorte à éviter l'apparition de pertes de pas.

12. Dispositif selon la revendication 11, dans lequel
- le support d'informations (2) consiste en une plaque luminescente à mémoire (2) destinée à enregistrer des informations radiographiques et la plaque luminescente à mémoire (2) et/ou une cassette (1) dans laquelle se trouve la plaque luminescente à mémoire (2), sont traitées par le moyen de traitement mécanique (7, 13), en étant notamment déplacées et/ou fixées, et
- il est prévu un dispositif de lecture (6) destiné à lire les informations radiographiques enregistrées dans la plaque luminescente à mémoire (2).
